Europäisches Patentamt

(19) European Patent Office

Office européen des brevets

(11) Publication number: **0 073 591**
**A1**

(12) # EUROPEAN PATENT APPLICATION

(21) Application number: **82304286.6**

(22) Date of filing: **13.08.82**

(51) Int. Cl.³: **B 62 D 3/12, F 16 J 15/52**

(30) Priority: **13.08.81 GB 8124832**

(43) Date of publication of application: **09.03.83**
**Bulletin 83/10**

(84) Designated Contracting States: **DE FR GB IT**

(71) Applicant: **CAM GEARS Limited, 45, Wilbury Way Hitchin, Hertfordshire SG4 0TU (GB)**

(72) Inventor: **Boucher, Christopher Philip James, 11 Chard Road, Clevedon Avon (GB)**

(74) Representative: **Walters, Frederick James et al, Urquhart-Dykes & Lord 47 Marylebone Lane, London W1M 6DL (GB)**

(54) **A rack and pinion assembly.**

(57) A rack and pinion assembly in which a rack bar is longitudinally movable through a rack bar housing 1 on rotation of the pinion to displace a transmission element 3 coupled at one end of the rack bar and a tubular bellows 4 provides fluid sealing engagement between an associated end 2 of the rack bar housing and the transmission element. The bellows engages the transmission element at a neck portion 10 in which is provided an internal annular rib 12 which engages a corresponding recess 14 in the transmission element. The neck portion has the same cross section as the transmission element and is formed of a resilient material such as HYTREL which permits it to slide over the transmission element and to snap engage with the recess so that the sealing engagement is maintained in the absence of other retaining means.

- 1 -

## TITLE

A rack and pinion assembly.

## TECHNICAL FIELD

The present invention relates to rack and pinion assemblies and is particularly concerned with a rack and pinion assembly of the type (hereinafter referred to as "the type specified") which comprises a pinion rotatably mounted in a pinion housing, a rack bar linearly movable in a longitudinal direction through the pinion housing and within an elongate rack bar housing associated with the pinion housing, a toothed rack on the rack bar which operatively engages with the pinion so that rotation of the pinion effects movement of the rack bar longitudinally through the housings, a transmission element coupled to one end of the rack bar and extending generally longitudinally therefrom outwardly of the rack bar housing for longitudinal displacement with the rack bar, and a tubular bellows which extends in fluid sealing manner between the rack bar housing and the transmission element and which expands and contracts with longitudinal displacement of the rack bar through the housings and with concurrent longitudinal displacement of the transmission element relative to the rack bar housing.

Rack and pinion assemblies of the type specified are particularly, but not essentially, used with steering assemblies for vehicles and in this case a respective transmission element, for example in the form of a tie rod, may be coupled to each end of the rack bar, each such transmission element having a respective bellows associated therewith and being adapted to be coupled to a respective steerable road wheel.

## BACKGROUND ART

Rack and pinion assemblies of the type specified are well known and have been used in steering assemblies for vehicles for several years. One of the problems associated with rack and pinion assemblies is to ensure the fluid seal at the end of the rack bar housing from which the transmission element extends outwardly. The tubular bellows of natural or synthetic rubber or, for example, polyurethane, has traditionally performed this function, but the difficulty with the bellows is adequately sealing it at its connection with the transmission element, which is usually of circular cross-section and of relatively small diameter (i.e. 12 mm).

With the connecting portion of the bellows being formed of rubber or polyurethane of relatively low resilience one proposal for providing the fluid sealing connection between the bellows and the transmission element has been to form the cross-section of the connecting neck of the bellows substantially smaller than that of the transmission element so that the neck must be stretched and slid over the element. Nevertheless the relatively low resilience of the material of the neck has raised the possibility that with continual flexing of the bellows, the fluid may be able to escape between the neck and the transmission element. To alleviate that possibility it is conventional to provide some securing means which ensures the seal. The securing means have taken the form of adhesive to bond the neck and transmission element together, or of various types of clip which tighten the grip of the neck on the transmission element.

Particularly in the case of rack and pinion assemblies of the type specified for use in steering assemblies for road vehicles, the tracking of the wheels must be set initially and occasionally re-adjusted with the steering assembly in the vehicle. Adjusting the wheel tracking requires adjustment of the distance between the distal ends of the transmission elements to which the wheels are respectively coupled by, for example, ball joints. Generally each transmission element is connected to the associated coupling by a screw threaded engagement and the transmission elements are rotatable to adjust said distance between the distal ends and thereby the tracking. If the bellows is clipped to the transmission element as aforesaid it must be released before the tracking is set or the bellows will be screwed up with the transmission element so that it cannot operate properly and may break easily. After setting the tracking the clips must be re-tightened which requires an additional labour step, or if the re-tightening is omitted, the fluid seal is lost.

Reducing the quantity of parts and assembly steps is of prime importance and it is an object of this invention to provide a rack and pinion assembly of the type specified in which the requirement at the assembly stage for additional sealing means between the bellows and the transmission element is reduced.

### STATEMENT OF INVENTION

According to the present invention there is provided a rack and pinion assembly of the type specified in which the fluid sealing engagement between the transmission element and the bellows is at a neck portion of the bellows which is of substantially the same internal cross-section as the cross-section of the transmission element, and wherein a peripheral recess is provided in one of the transmission element and the internal wall of the neck portion and a co-operating peripheral rib is provided on the other of the transmission element and internal wall of the neck portion, and further wherein the neck portion is formed of a resilient material which permits sliding movement of the neck portion over the transmission element and snap engagement of the peripheral rib and recess with such force and retaining effect that, in the absence of other retaining means, the rib and recess maintain said fluid sealing engagement throughout the intended expansions and contractions of the bellows in use.

Further according to the present invention there is provided a steering gear assembly comprising a rack and pinion assembly substantially as described in the preceding paragraph.

While the elasticity of flexure of the neck portion of the bellows may be relatively low, the Young's Modulus should be relatively high, and substantially higher than that of the rubbers and polyurethanes used conventionally in the neck portions of bellows in rack and pinion assemblies, so that the internal cross-sectional area of the neck portion varies little during assembly. A preferred material for the neck portion of the bellows, and which may be used for the bellows as a whole, is a polyester polyether grade of thermoplastics elastomer, for example that sold under the Trade Mark HYTREL by DuPont Inc..

Conveniently the peripheral recess is formed in the transmission element and the peripheral rib is formed in the internal wall of the neck portion, for example during moulding of the bellows. Preferably the thickness of the material of the neck portion is substantially the same at the location of the rib as elsewhere so that a corresponding recess is formed in the external wall of the neck portion. The snap engaging and retaining force between the neck portion of the bellows and the transmission element is believed to be greatest if said one of the peripheral recess and rib is provided intermediate the ends of the neck portion.

In a rack and pinion assembly in accordance with the invention and in which the transmission element is of the order of 12 mm in diameter, the peripheral rib may be approximately 1 mm deep.

In order to facilitate sliding motion of the neck portion over the transmission element, the peripheral rib is preferably rounded, i.e. of arcuate cross-section, and where the rib is formed on the neck portion, the end of the transmission element on to which the neck portion is introduced during assembly may be rounded or tapered to further facilitate assembly. The peripheral recess with which the peripheral rib snap-engages may be substantially straight-sided with the sides extending at least perpendicularly to the surface of the transmission element over which the neck portion is slid to provide the snap engagement but is preferably also of arcuate cross-section and of substantially the same radius as the aforementioned arcuate cross-section of the rib. Such shaping of the peripheral recess combined with the relatively high resilience of the neck portion reduces the likelihood of the rib and recess becoming accidentally disengaged. Preferably, the combination may be such as to prevent removal of the bellows from the transmission element without cutting the bellows open, or otherwise straining the neck portion beyond its elastic limit.

## FIGURES IN THE DRAWINGS

One embodiment of a rack and pinion assembly in accordance with the present invention will now be described by way of example only, with reference to the accompanying illustrative drawings, in which:

FIGURE 1 is a sectional view of part of the assembly, taken along an axial plane and illustrating the end of a rack bar housing and tubular sealing bellows on one side of the axis X-X only, and

FIGURE 2 is an enlargement of the encircled portion of FIGURE 1.

## DETAILED DESCRIPTION OF THE DRAWINGS

The rack bar assembly in accordance with the present invention and shown in the drawings comprises an elongate rack bar housing 1 through which is longitudinally movable a rack bar (not shown). The rack bar is moved longitudinally in known manner by means of a rotatively mounted pinion (not shown), which in the case of a steering assembly may be connected to a vehicle steering wheel (not shown). The pinion is mounted in a pinion housing (not shown) associated with the rack bar housing 1.

The rack bar housing 1 is tubular and has an open end 2 and from the open end 2 projects a transmission element 3, which in the case of a steering assembly may be in the form of a tie rod. The transmission element 3 is coupled at its end within the housing 1 to one end of the rack bar, usually by means of a universally-movable joint. The other end of the transmission element is coupled, in the case of a steering assembly, to a steerable road wheel and generally in known manner a further steerable road wheel will be coupled through a further transmission element to the other end of the rack bar. For convenience only one end of the assembly will be described, although it will be appreciated that the following description could apply to either end. Although the transmission element 3 is shown as extending with the rack bar housing 1, it will be appreciated that the rack bar may extend into the bellows.

Lubrication fluid is provided within the rack bar housing 1 and a tubular sealing bellows 4 is provided between the open end 2 of the rack bar housing 1 and the transmission element 3 to provide a fluid seal.

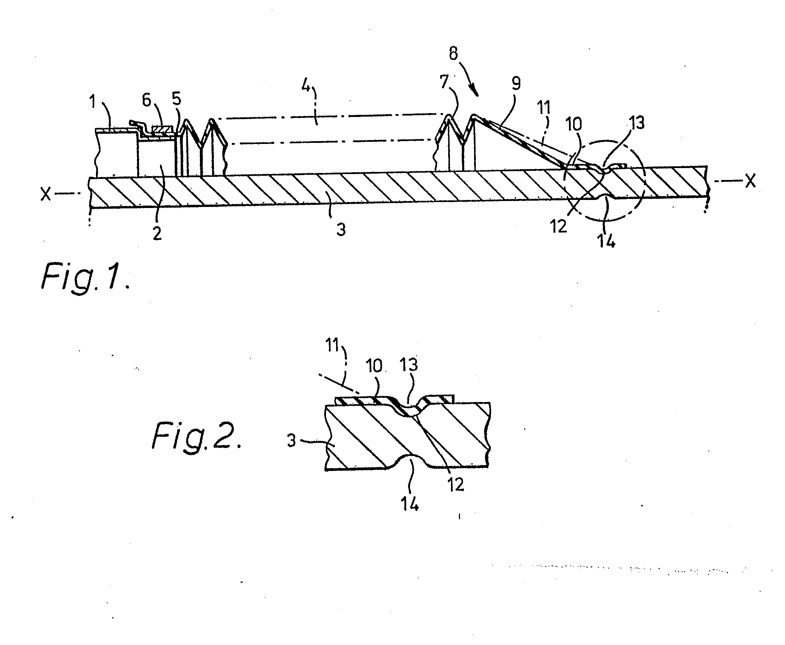

In FIGURE 1 the tubular bellows 4 and rack bar housing 1 are shown in section on one side of the axis X-X only, but it will be appreciated that the view on the other side of the axis would be essentially a mirror image of the view shown.

At its end connected to the open end 2 of the rack bar housing 1 the tubular bellows 4 is provided with an annular flat 5 which overlaps in close-fitting manner a corresponding portion of the end 2. In order to retain the bellows on the end 2, a suitable and known annular clamp or clip 6 is used which is shown in schematic form only.

The bellows 4 has a plurality of annular corrugations 7 and is formed, for example, by injection or blow moulding, from a thermoplastics elastomeric material of relatively high resilience such as a polyester polyether.

an example of which is marketed under the Trade Mark HYTREL by DuPont Inc.. The thickness of the material of the corrugations 7 reduces with increasing radius and in conjunction with an ability of the material to flex, the corrugations permit the contraction and expansion of the bellows during longitudinal movement of the transmission element 3 in and out of the rack bar housing 1. The material however has a relatively high Young's Modulus with the result that it is difficult to stretch.

At its end 8 remote from the annular flat 5, the bellows has a frusto-conical part 9 which extends from the end of the corrugations to a neck portion 10 which has an internal diameter substantially the same as that of the transmission element 3. The thickness of the material of the bellows increases gradually with decreasing diameter of the frusto-conical part 9 and the neck portion 10 is relatively inflexible. The stiffness of the neck portion 10 and frusto-conical part 9 may be increased by tapered ribs such as that shown at 11 in dotted lines in FIGURE 1. Formed substantially centrally, in the axial direction, of the neck portion 10 is an annular rib 12 which projects radially inwardly of the inner surface of the neck portion. The rib 12 is moulded into the neck portion and the thickness of the material of the neck portion 10 is maintained through the rib 12 so that a corresponding groove 13 is defined on the radially outer surface of the neck portion.

In use the rib 12 co-operates with an annular recess 14 formed in the transmission element. In order to assemble the bellows 4 and transmission element 3, the neck portion 10 is forced on to the transmission element 3 and slid therealong until the rib 12 snap-engages into the recess 14. As hereinbefore described the neck portion 10 of the bellows is of substantially

0073591

- 9 -

the same diameter as the transmission element with the rib 12 projecting inwardly of said diameter. Accordingly, the rib 12 must be forced over the end of the transmission element and this is permitted by the resilient material of the neck portion 10 because the degree of flexibility in the material allows the annular rib 12 and corresponding groove 13 to at least partially flatten out with the rest of the neck portion. As soon as the rib 12 overlies the recess 14, the resilience of the material causes snap engagement with such force and retaining effect that, in the absence of additional clips, adhesive and such like, the rib 12 maintains fluid sealing engagement with the recess 14 throughout the intended length variations required of the bellows in use.

The rib 12 has a rounded shape, i.e. it is of arcuate cross-section, and this facilitates the sliding engagement of the rib with the end of the transmission element. To further facilitate such engagement such end of the transmission element may be tapered (not shown) whereby the increase in diameter of the rib 12 during assembly of the neck portion 10 on to the transmission element 3 is gradual. In practice the annular recess 14 is likely to be located adjacent such end of the transmission element.

As shown more clearly in FIGURE 2 the recess 14 is arcuate in cross-section and of substantially the same radius as the rib 12, and this reduces further any possibility of the rib 12 being withdrawn from the recess 14. In practice it may be desirable that the bellows 4 in a rack and pinion assembly in accordance with the present invention is prevented from being removed from the transmission element 3 by the rib and recess and that such removal must be by cutting. The combination of material of high resilience, and the shape and relative sizes of the neck portion 10 and transmission element 3 and the rib 12 and recess 14 therein may be used to provide this feature.

- 1 -

CLAIMS

1. A rack and pinion assembly of the type specified
in which the fluid sealing engagement between the
transmission element and the bellows is at a neck
portion of the bellows, the assembly being
characterised in that the neck portion (10) has a
natural internal cross-section which is substantially
the same as the cross-section of the transmission
element (3) and has one of a peripheral recess (14)
and a co-operating peripheral rib (12) in its
internal wall with the other of said peripheral recess
and rib being provided on the transmission element and
further characterised in that the neck portion is
formed of a resilient material which permits sliding
movement of the neck portion over the transmission
element and snap engagement of the peripheral rib
and recess with such force and retaining effect that,
in the absence of other retaining means, the rib and
recess maintain said fluid sealing engagement
throughout the intended expansions and contractions
of the bellows in use.

2. A rack and pinion assembly according to claim 1
characterised in that the peripheral rib is formed
in the internal wall of the neck portion.

3.    A rack and pinion assembly according to claim 2
characterised in that the thickness of the material
of the neck portion at the rib is substantially the
same as the thickness of the material of the neck
portion immediately adjacent the rib whereby a
corresponding recess (13) is formed in the external
wall of the neck portion.

4.    A rack and pinion assembly according to claim 2
or claim 3 characterised in that the end portion of
the transmission element on to which the neck
portion is introduced during assembly is rounded or
tapered.

5.    A rack and pinion assembly according to any one
of the preceding claims characterised in that the
peripheral rib is of arcuate cross-section.

6.    A rack and pinion assembly according to any
one of the preceding claims characterised in that
the peripheral recess has the same cross-section as
the peripheral rib.

7.    A rack and pinion assembly according to any one
of the preceding claims characterised in that the
one of the peripheral recess and rib provided on the
internal wall of the neck portion is located
intermediate the ends of the neck portion.

8.    A rack and pinion assembly according to any one
of the preceding claims characterised in that the
resilient material of neck portion comprises a
polyester polyether grade of thermoplastics elastomer.

9.    A rack and pinion assembly according to any one of the preceding claims characterised in that the bellows (4) is formed substantially wholly of the resilient material.

10. A steering assembly comprising a rack and pinion assembly of the type specified with a respective transmission element coupled to each end of the rack bar and each such transmission element having a respective bellows associated therewith and being adapted to be coupled to a respective steerable road engaging means, the steering assembly being characterised in that each of the associated bellows and transmission elements are as claimed in any one of the preceding claims.

Fig.1.

Fig.2.

0073591

European Patent Office

**EUROPEAN SEARCH REPORT**

Application number

EP 82 30 4286

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 081 265 (FORD MOTOR CO.) * claims 1-3 ; page 2, lines 36-40 ; figure 1 * | 1 | B 62 D 3/12<br>F 16 J 15/52 |
| A | DE-U-1 933 391 (A. EHRENREICH) * claims 1, 3, 4 ; figures 1, 2 * | 1,2,6, 7,9 | |
| A | DE-A-2 734 516 (AUDI NSU AUTO UNION) | | |
| A | DE-A-2 147 454 (CONTINENTAL GUMMI-WERKE) | | |

TECHNICAL FIELDS SEARCHED (Int. Cl. ³)

B 62 D 3/00
F 16 H 19/00
F 16 J 3/00
F 16 J 15/00

The present search report has been drawn up for all claims

| Place of search | Date of completion of the search | Examiner |
|---|---|---|
| BERLIN | 26-10-1982 | LEMBLE Y.A.F.M. |